# EUROPEAN PATENT SPECIFICATION

(11) **EP 2 106 167 B1**
(45) Date of publication and mention of the grant of the patent: **18.07.2012**
(21) Application number: 08400014.0
(22) Date of filing: 28.03.2008
(51) Int. Cl.: H04W 4/00

(54) **Least cost routing of a communication link for a mobile communication device**
Kostengünstigstes Routing einer Kommunikationsverbindung für ein mobiles Kommunikationsgerät
Routage à moindre coût d'une liaison de communication dans un dispositif de communications mobiles

(43) Date of publication of application: 30.09.2009
(73) Proprietor: Vodafone Holding GmbH, 40213 Düsseldorf (DE)
(72) Inventor: Koraichi, Najib, 6333 CT Schimmert (NL)
(74) Representative: Jostarndt, Hans-Dieter

(56) References cited:
- GB-A- 2 362 782
- US-B1- 6 657 989

## Description

### Field of the invention

The invention relates to an adapter module for use in a mobile communication device connected to a first communication network, the mobile communication device comprising a mobile terminal and a subscriber identification module connected to the mobile terminal. The invention further relates to a mobile communication device for initiating a communication link to a terminating communication device selected by a user of the mobile communication device and to a method for initiating a communication link between a mobile communication device and a terminating communication device selected by a user of the mobile communication device.

### Background of the invention

In communication systems comprising a mobile communication network, communication links from a mobile communication device registered in the mobile communication network to a terminating communication device; can be established using so-called least cost routing (LCR) services. Such services are provided by means of gateway nodes, which are connected to the mobile communication network and operated independently from the mobile communication network. The gateway nodes establish a communication link via a route that is different from that invoked by the mobile communication network, thereby allowing for establishing the communication link for lower costs than the mobile network provider charges for routing the communication link. Likewise, additional services can be provided by the gateway nodes, which are not supported by the mobile communication network.

Usually, the LCR services involve the establishment of a communication link from the mobile communication device to the gateway node via the mobile communication network, which the gateway node routes to the terminating device via one or more communication networks.

For this purpose the gateway node may invoke a so-called call through procedure. This means that the communication link between the mobile communication device and the gateway node is forwarded to the terminating communication device via an appropriate route. For establishing the communication link to the gateway node the mobile communication device generates a communication request using an identification code of the terminating communication device supplemented by an access code assigned to the gateway node. The access code causes the communication request to be routed to the gateway node by the mobile communication network. If the communication link is a voice call, the identification code is usually a telephone number of the terminating communication device and the access code assigned to the gateway node is a prefix, which is being added to telephone number.

As an alternative, the gateway node may invoke a so-called call back procedure for establishing the communication link between the mobile communication device and the terminating communication device. Here, the mobile communication device initially informs the gateway node that a communication link to the terminating communication device is to be established. Then, the gateway node initiates a first communication link between the gateway node and the mobile communication device and connects the first communication link to a second communication link between the gateway node and the terminating communication device. For informing the gateway node about the communication link to be established, the mobile communication device may call the gateway node using again the identification code of the terminating communication device supplemented by an access code assigned to the terminating communication device or the mobile communication device sends a message to the gateway node via the mobile communication network.

The LCR service may be accessed by manually generating an appropriate communication request at the mobile communication device, i.e. by manually adding the access code when specifying the identification code or by manually sending the request message to the gateway node. However, an automatic generation of an appropriate communication request facilitates the use of LCR service for the user of the mobile communication device.

GB 2 362 782 A discloses a mobile telephone, comprising a processor for controlling operation of the mobile telephone, and a subscriber identity module (SIM) comprising means for interfacing with the processor of the mobile telephone to receive a number to be called from the processor and means for pre-fixing a routing code to the number to be called, so that the call is routed to a gateway switch to which the routing code is assigned. Here, the SIM is a subscriber identification module according the GSM mobile communication standard (GSM: Global System for Mobile Telecommunication), which is included in a mobile communication device and which particularly stores user-related data for registering the mobile communication network in a mobile communication network.

The known mobile telephone has the disadvantage, that a subscriber identification module including a special application is needed for accessing the LCR service.

US 6 657 989 B1 relates to an apparatus and a method for routing communications. In one embodiment, a function of a LCR module is incorporated into a mobile telephone. The processor of the mobile telephone includes a route selector which refers to a decision table before processing a user input call destination to enable an appropriate a prefix to be added to the user dialled number.

### Summary of the invention

Therefore, it is an object of the present invention to allow a mobile communication device to access a LCR service automatically independent of a functionality of a subscriber identification module included in the mobile communication device.

This object is achieved by an adapter module according to claim 1, by a mobile communication device according to claim 11 and by a method according to claim 12. Embodiments of the adapter module, the mobile communication device and the method are given in the dependent claims.

The invention involves the idea to provide functionality for modifying a communication request by means of an adapter module, which is connected to the mobile terminal of the mobile communication device. The use of an adapter module makes it possible, to modify the communication request in such a way that the request is transmitted to a gateway node connected to the mobile communication device independent of a special functionality of the mobile terminal or the subscriber identification module, Thus, by connecting the adapter module to the mobile terminal any mobile communication device is capable of automatically accessing LCR services. The communication link between the mobile communication device and the terminating communication device may be a voice call, for example. However, the invention likewise refers to other types of communication links such as, for example, communication links for transmitting messages or other data.

In one exemplary embodiment, the adapter module, connectable between the mobile terminal and subscriber identification module, is able to use the interface of the mobile terminal for connecting the subscriber identification module to interact with mobile terminal and thus can be connected to an existing interface of the mobile terminal. Therefore, no special interfaces for connecting the adapter module to the mobile terminal are necessary and the adapter module can be used in any mobile communication device.

In another exemplary embodiment of the adapter module, the mobile communication device and the method, the adapter module is configured to add an access code assigned to the gateway node to an identification code of the terminating communication device included in the communication request, the access code causing the communication request to be routed to the gateway node by the first communication network.

In this exemplary embodiment, the adapter module advantageously modifies the communication request in that it adds an access code of the gateway node to an identification code of the terminating communication device included in the communication request. Due to the access code the communication request is routed to the gateway node by the mobile communication network. The communication request may be forwarded to the terminating communication device by the gateway node using a call through procedure, Likewise, the communication request may inform the gateway node that a communication link is to be established and triggers an establishment of the communication link using a call back procedure.

At least in circuit switched communication networks the terminating communication device is identified using a telephone number and a communication request is routed to its destination using the telephone number included in the request.

Therefore, in one exemplary embodiment of the adapter module, the mobile communication device and the method, the identification code is a telephone number assigned to the terminating communication device and the access code is a prefix, which is added to the telephone number.

In one exemplary embodiment of the adapter module, the mobile communication device and the method, the gateway node is configured to initiate a first communication connection between the gateway node and the mobile communication device upon receipt of the communication request and to connect the first communication connection to a second communication connection between the gateway node and terminating communication device.

This corresponds to a call back procedure for establishing the communication link between the mobile communication device and the terminating communication device. This procedure provides that the gateway node initiates a first communication connection to the mobile communication device upon receiving a corresponding request from the mobile communication device. Then, the gateway node initiates a second communication connection to the terminating communication device, which is being connected to the first communication device.

The first communication connection has to be accepted by the mobile communication device. Therefore, in one exemplary embodiment of the adapter module, the mobile communication device and the method, the adapter module is configured to instruct the mobile terminal to accept the first communication connection automatically.

In this exemplary embodiment the user of the mobile communication device is disburdened from accepting the first communication connection manually, thereby improving convenience for the user.

In one exemplary embodiment of the adapter module, the mobile communication device and the method, the adapter module is configured to modify the communication request by generating a request message containing the identification code of the terminating communication device and to control the mobile terminal to send the request message to the gateway node via the first communication network.

It is an advantage of this exemplary embodiment that the adapter module is able to modify the communication in that it generates a request message, which is transmitted to the gateway node under the control of the adapter module. The request message may trigger the gateway node to initiate the first communication connection to the mobile communication device, which is connected to the second communication connection to the terminating communication device for establishing the communication link between the mobile communication device and the terminating communication device.

In one exemplary embodiment of the adapter module, the mobile communication device and the method, the request message is sent to the gateway node using a second communication service provided by the first communication network, which is different from a first communication service provided by the first communication network that is used for establishing the communication link between the mobile communication device and the terminating communication device.

Here, the first communication service may be a service for establishing voice calls and the second communication service may be a service for transmitting data messages. This service may be a short message service, for example, or a service for transmitting data message via a packet switched communication.

Furthermore, a plurality of gateway nodes may be connected to the first network, which may be operated by different providers of LCR services. These providers may offer LCR services for different charges. Moreover, the difference in the charges may vary depending on characteristics of a communication link to be established, such as, for example, the time of day, the day of the week, the geographic location of the mobile communication network and the type and geographic location of the communication network to which the terminating communication device is connected.

Therefore, in one exemplary embodiment of the adapter module, the mobile communication device and the method, at least two gateway nodes are connected to the first communication network and wherein the adapter module is configured to select the gateway node to which the communication request is transmitted in accordance with predefined criteria.

Particularly, the predefined criteria may be applied in order to determine the gateway node, which offers the lowest charges for establishing the communication link between the mobile communication device and the terminating communication device. Thus, the predefined criteria are preferably based on the aforementioned characteristics specific the communication link.

Moreover, in one exemplary embodiment of the adapter module, the communication device and the method, the first communication network is a mobile communication network.

The aforementioned and other aspects of the invention will also be apparent from and elucidated with reference to the embodiments of the invention described hereinafter making reference to the drawings.

### Brief description of the drawings

Reference will be made by way of example to the accompanying drawings in which
- Fig. 1: a schematic depiction of a mobile communication device connected to a communication network to which a gateway for routing connections is attached and
- Fig. 2: a schematic block diagram of the mobile communication device in one embodiment of the invention.

### Detailed description of embodiments of the invention

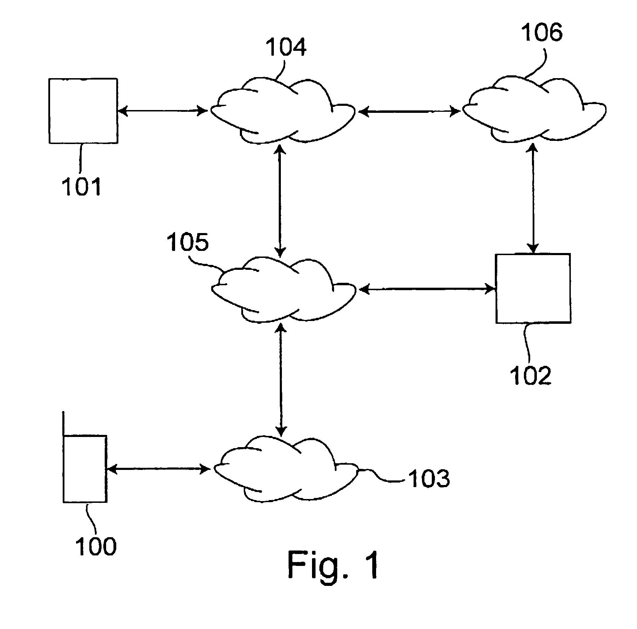

Figure 1 schematically depicts a telecommunication system for establishing a communication link between a mobile communication device 100 and a terminating communication device 101 involving a gateway node 102. The mobile communication device 100 may be a cellular phone, a PDA or the like and is registered in a mobile communication network (PLMN) 103. The mobile communication network 103 may be configured according to the GSM standard (GSM: Global System for Mobile Communication) or to the UMTS standard (UMTS: Universal Mobile Telecommunications System), for example, and comprises a circuit switched domain and a packet switched domain. The mobile communication devices 100 accesses the PLMN 103 network wirelessly via a radio access network, which may be configured according to a radio access technology known to a person skilled in the art. For example, the radio access network may be configured as GERAN (GSM EDGE Radio Access Network) or UTRAN (UMTS Terrestrial Radio Access Network).

The terminating communication device 101 is connected to a terminating communication network 104, which may be another mobile communication network, a public switched telephone network (PSTN) or an IP network based on the Internet protocol (IP), for example. The communication device 101 comprises an interface for accessing the communication network 101 and allows for communicating via the terminating communication network 104. For example, the terminating communication device 101 may be a cellular phone, a PDA, a personal computer, a notebook or a telephone device.

In the normal mode of operation of the mobile communication network 103, a communication link, such as, for example a voice call, between the mobile communication device 100 and the terminating communication device 101 would be established in accordance with the routing functions and entities implemented in the PLMN 103. In the present communication system, a communication link between the mobile communication device 100 and the terminating communication device 101 is established via a gateway node 102 thereby bypassing the normal call routing provided in the PLMN 103. In particular, the PLMN 103 only controls the establishment of a communication link between the mobile communication device 100 and the gateway node 102, while the gateway node 102 is responsible for establishing the communication link between the gateway node 102 and the terminating communication device 101.

In the present embodiment, the gateway node 102 is connected to the PLNM 103 via a PSTN 105 that is coupled to PLMN 103, However, in other embodiments, the gateway node 102 may be connected directly to the PLMN 103. The gateway node 102 may route a call request addressed to the terminating communication device 101 to the terminating communication network 104 via the PSTN 105 or via one or more additional communication networks 106 to which the gateway node 102 is connected. The additional communication networks 106 may be further PLMNs, PSTNs or IP networks. The route selected by the gateway node 102 may be determined according to the type of the terminating communication network 104. Furthermore, the gateway node 102 may select the route in accordance with further characteristics specific to the call. Particularly, the selection may be made based on the charges for routing the call through different networks, in order to determine the route with the lowest costs for establishing the communication link to the terminating communication device 101. One characteristic, which influences the charges for establishing a connection, may be the time of the day and/or the day of the week, for example.

In one embodiment, the gateway node 102 invokes a so-called call through procedure for setting up call. This means, that a call request generated in the mobile communication device 100 that is received in the gateway node 102, is forwarded via the selected route to the terminating communication network 104, which forwards the request to the terminating communication device 101. Thus, in this embodiment the gateway node 102 essentially acts as switch that routes the call via the selected route. In order for the call request to be routed to the gateway node 102 by the PLMN 103, the identification code used for addressing the call request to the terminating communication device 101 is supplemented by an access code assigned to the gateway node 102. This access code is recognized in the PLMN 103 and causes the call request to be directed to the gateway node 102.

Usually, the identification code for addressing a call request to a terminating communication device 101 in a PLMN 103 is a mobile subscriber integrated services digital network number (MSISDN) assigned to the terminating communication device 101. The access code allocated to the gateway node 102 may be for example, a prefix number, which is added to the MSISDN of the terminating communication device 101.

In another embodiment, the gateway node 102 invokes a so-called call back procedure for establishing the communication link between the mobile communication device 100 and the terminating communication device 101. This procedure involves the following two distinct steps. In a first step a request for establishing the communication link is transmitted from the mobile communication device 100 to the gateway node 102 informing the gateway node 102 that a call between the mobile communication device 100 and the terminating communication device 101 is to be set up. In a second step, the gateway node 102 sets up a first call to the mobile communication device 100 via the PSTN 105 and the PLMN 103 in response to the receipt of the request. When the call is accepted by the mobile communication device 100, the gateway node 102 initiates a second call to the terminating communication device 101 via the selected route and connects the two calls to each other.

The initial request informs the gateway node 102 about the identification code of the mobile communication device 100, which the gateway node 102 uses to set up the first call to the mobile communication device 100, and about the identification code of the terminating communication device 101, which the gateway node 102 uses to set up the second call to the terminating communication device 101. The request can be transmitted to the gateway node 102 through various communication services the PLMN 103 provides.

In one embodiment, the mobile communication device 100 calls the gateway using the identification code of the terminating communication device 101 supplemented by the prefix assigned to the gateway node 102. Due to the prefix the PLMN 103 routes the call request to the gateway node 102 and the gateway node 102 extracts the identification code of the terminating communication device 101 and the identification code of the of the mobile communication device 100, which is included in the call request as indication of the originating party. The call request may then be rejected by the gateway node 102 or the gateway node 102 may accept the call and terminate it after a short time.

In a further embodiment, the mobile communication device 100 sends a request message to the gateway node 102 via the PLMN 103, which contains at least the identification code of the terminating communication device 101. Optionally, the request message may also contain the identification code of the mobile communication device 100. However, this identification code may also be extracted from the signalling communication used for transmitting the message. The request message may be a short message send by means of a short message service (SMS) addressed by means of the access code assigned to the gateway node 102 or the message may be send via the packet switched domain of the PLMN 103 using, for example, the General Pocket Radio Service (GPRS). In the latter case, the request message is forwarded from the PLMN 103 to the gateway node 102 via an IP network the gateway node 102 is connected to and the message is addressed using an access code of the gateway node 102, which may be a network address of the gateway node 102 in the IP network, for example. In case, the request message is a short message, the access code may be an MSISDN assigned to the gateway node 102, which is used by the mobile communication network to route the short message to the gateway node 102.

Although figure 1 shows only one gateway node 102 connected to the PLMN 103, the telecommunication system preferably comprises several gateway nodes 102 of the type described before each being configured to establish a connection between the mobile communication device 100 and the terminating communication device 101 by means of a call through procedure or a call back procedure. The various gateway nodes 102 are operated by different providers and provide routing services for different charges. The difference in the charges will vary depending particularly on the time of the day and/or the day of week, on the type and geographic location of the terminating communication network 104 and on the geographic location of the mobile communication network 103.

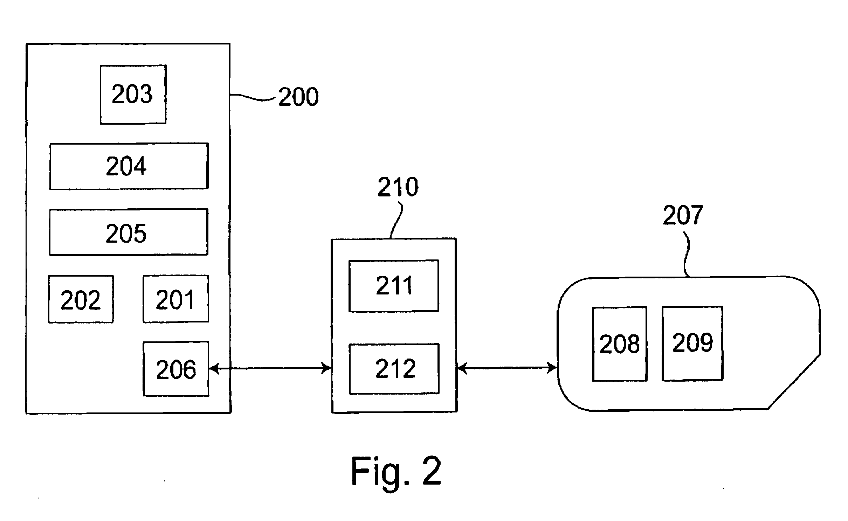

Figure 2 shows a schematic block diagram of the mobile communication device 100 in one embodiment of the present invention. The mobile communication device 100 comprises a mobile terminal 200 including a main processor 201 for controlling the operation of the mobile terminal 200. A memory unit 202 is coupled to the main processor 201 for storing data and applications that can be run on the main processor 201.

Furthermore, the mobile terminal 200 comprises one or more communication interfaces. Particularly, the mobile terminal 200 provides a radio interface 203 for connecting the mobile terminal 200 wirelessly to the PLMN 103. A further wireless interface, such as for example, a WLAN interface may be provided for connecting the mobile terminal 200 to an IP network.

Moreover, the mobile terminal 200 comprises a display unit 204 and an input unit 205, which can be operated by the user of the mobile communication device 100. The input unit 205 may be configured as a keypad.

By means of a card reader unit 206, the mobile terminal 200 can be connected to a subscriber identification module 207 to form the mobile communication device 100. The subscriber identification module 207 is a so-called smart card, which can be inserted into a card receptacle of the mobile terminal 200 that holds the card in a position, in which its contact elements are connected to corresponding contact elements of the card reader unit 206 of the mobile terminal 200. The card receptacle and the card reader unit 206 are usually arranged within a battery compartment of the mobile terminal 200, which is accessible by the mobile user.

The subscriber identification module 207 may be configured as a subscriber identity module (SIM) according to the GSM standard or as a universal subscriber identity module (USIM) according to the UMTS standard. It comprises a microprocessor 208 and a non-volatile memory 209 and stores pre-configured user-related and network-related data, particularly data identifying the mobile user and data for authenticating the user or his mobile communication device 100 to the cellular mobile network 102. Moreover it may store personal data of the mobile user, such as for example, identification codes of communication partners of the mobile user, which are managed by an address book application.

Within the scope of the invention, the subscriber identification module 207 is not connected directly to the mobile terminal 200 or its card reader unit 206, but via an adapter module 210. The adapter module 210 comprises a microprocessor 211 and a memory unit 212 for storing data and applications that can be run on the microprocessor 211. The adapter module 210 is connected between the mobile terminal 200 and the subscriber identification module 207 and acts as a so-called man in the middle between the mobile terminal 200 and the subscriber identification module 207. Hence, communication signals between the mobile terminal 200 and the subscriber identification module 207 are exchanged via the adapter module 210 that forwards data messages from the mobile terminal 200 to the subscriber identification module 207 and vice versa.

The adapter module 210 is be capable of manipulating or modifying the data exchange between the mobile terminal 200 and the subscriber identification module 207. Moreover, the adapter module 210 is capable of initiating a communication with the mobile terminal 200 and/or the subscriber identification module 207 to interact proactively with the mobile terminal 200 and with the subscriber identification module 207. For this purpose, the adapter module 210 may implement the SIM application toolkit (SAT) specified in the specification GSM 11.14 of the 3^{rd} generation project partnership (3GPP) if the subscriber identification module 207 is a SIM according the GSM standard or the adapter module 210 may implement the USIM application toolkit (USAT) specified in the specification TS 31.111 of the 3GPP if the subscriber identification module 207 is a USIM. The SAT or USAT allows the subscriber identification module 207 to access functions of the mobile terminal 200 and particularly comprises so-called proactive commands by means of which the subscriber identification module 207 is able to access the functions of the mobile terminal 200 on its own initiative. By implementing the SAT or USAT in the adapter module 210, the adapter module 210 is able to access the functions of the mobile terminal 200 in the same way as the subscriber identification module 207.

For connecting the adapter module 210 between the mobile terminal 200 and the subscriber identification module 207, the adapter module 210 comprises a contacting element, which can be inserted into the card receptacle of the mobile terminal 200 and which includes electric contacts for contacting the contact elements of the card reader unit 206. Further electrical contacts are provided for contacting the electric contacts of the subscriber identification module 207. The electric contacts for connecting the adapter module 210 to the mobile terminal 200 and the electric contacts for connecting the adapter module 210 are connected to the microprocessor 211 of the adapter module 210.

As one of the electric contacts of the card reader unit 206 of the mobile terminal 200 acts as a power supply for the subscriber identification module 207, the adapter module 210 can also be supplied with power via this electric contact. Moreover the adapter module 210 is able to forward data received via an electric contact of the card reader to the corresponding electric contact of the subscriber identification module 207 and vice versa. The forwarded data may be modified by the microprocessor 211 of the adapter module 210 or the adapter module 210 may leave the data unmodified, thereby allowing a normal communication between the mobile terminal 200 and the subscriber identification module 207. Moreover, the proactive commands are sent from adapter module 210 to the mobile terminal 100 via the electric contact, which are provided for sending commands from the subscriber module 207 to the mobile terminal 210.

In one exemplary embodiment, the adapter module 210 comprises a thin contacting element, which has essentially the same shape as the subscriber identification module 207 and which can be inserted into the card receptacle of the mobile terminal 200 between the electric contacts of the card reader unit 206 and the subscriber identification module 207. On one surface, the contacting element comprises contact elements for contacting the contact elements of the subscriber identification module 207 and on the opposite surface, contact elements are arranged for contacting the contact elements of the card reader unit 206. The contact elements are connected to the microprocessor 211 of the adapter module 210. The microprocessor 211 and the memory unit 212 of the adapter module 210 may be mounted on a circuit board, which is connected to the contacting element by means of a flexible wire, thereby allowing placing the circuit board into the battery compartment of the mobile terminal 200 together with the battery. As an alternative, the microprocessor 211 and the memory unit 212 may be included in a chip that is mounted on the contacting element. In this embodiment, the subscriber identification module 207 is being provided with a cutting for accepting the chip.

In another embodiment, the adapter module 210 comprises a contacting element that has essentially the same shape and thickness as the subscriber identification module 207 and that can be inserted into the card receptacle of the mobile terminal 200 to contact the contact elements of the card reader unit 206. The contacting element is connected to a circuit board via one ore more flexible wires. The microprocessor 211 and the memory unit 212 are mounted on the circuit board and in addition, the circuit board comprises a card reader unit connected to the microprocessor 211 for receiving the adapter module 210 to the subscriber identification module 207. The circuit board may be thin enough to place it into the battery compartment of the mobile terminal 200.

Within the scope of the present invention, the adapter module 210 provides functionality for processing a call request generated by the user of the mobile communication device 100 in such a way that the call is set up via a gateway node 102.

In one embodiment, one gateway node 102 is specified in the adapter module 210. The gateway may be pre-configured in the adapter module 210 or it is configured by the user of the mobile communication device 100. In this embodiment, the access code assigned to this gateway node 102 is stored in the memory unit 212 of the adapter module 210 and routines are implemented in the adapter module 210 for modifying a call request in such way that the call is set up via this gateway node 102. These routines are adapted to the routing procedure invoked by the gateway node 102 and will be describe below in greater detail. The routines may be implemented in form of a software application stored in the memory unit 212, which is run on the microprocessor 211 of the adapter module 210. In addition, criteria may be specified for determining, whether the call request is to be modified by the adapter module 210 or whether a call is to be set up in the normal way via the PLMN 103. In particular, in accordance with these criteria the adapter module 210 may determine, whether the call request is to be modified depending on the time of the day, the day of the week, the geographic location of the mobile communication network 103, the geographic location or type of the terminating communication network 104 or on several of these characteristics. The criteria are stored in the memory unit 212 of the adapter module 210 and the adapter module 210 applies the criteria to the call request using an algorithm run on the microprocessor 211. The criteria may be pre-configured in the adapter module 210 by the issuer of the adapter module 210 or they may be specified by the user of the mobile communication device 100.

The configuration of the adapter module 210, i.e. the specification of the gateway node 102 and the criteria for modifying call requests, may be specified and/or modified by the user of the mobile communication device 100 by means of a user interface, which the adapter module 210 provides at the mobile terminal 200. The user interface is provided by accessing the display unit 204 and the input unit 205 of the mobile terminal 200 in such a way that information can be presented to the user and inputs of the user can be received in the adapter module 210. For this purpose, the adapter module 210 may use functions provided by the SAT or USAT.

In a further embodiment, the adapter module 210 is capable of processing a call request in such a way that the call is set up via one gateway node 102 of a plurality of gateway nodes 102 specified in the adapter module 210. In this embodiment, the access code of each of the plurality of gateway nodes 102 is stored in the adapter module 210 and the routines for modifying call request are specified in the adapter module 210 for each gateway node 102. When processing a call request, the adapter module 210 determines the most appropriate gateway node 102 and modifies the call request in such a way that the call is set up via this gateway node 102. The most appropriate gateway node 102 is the one which offers the lowest charges for setting up the specific call. Thus, the determination of the most appropriate gateway node 102 is made using criteria based on the charge tables of the various gateway nodes 102. As described before, the charges usually depend on the characteristics of call, such as the time of the day, the day of week, the type and geographic location of the terminating communication network 104 and the geographic location of the mobile communication network 103. The criteria for selecting the most appropriate gateway node 102 are stored in a look up table in the memory unit 212 of the adapter module 210 and an algorithm is implemented in the adapter module 210 for determining the most appropriate gateway node 102 by determining the characteristics of a call and selecting a gateway node 102 from the look up table as a function of the determined characteristics.

In the aforementioned embodiment, the configuration of the adapter module 210 may be pre-stored in the adapter module 210 by the issuer of the adapter module 210 or the user of the mobile communication device 100 may configure the adapter module 210 by means of a user interface. Moreover, in both cases the adapter module 210 preferably provides an interface for modifying the configuration. Particularly, the interface allows for a modification of the look up table, since the charges of the various gateway nodes 102 change from time to time. The updates of the look up table may be downloaded from the gateway nodes via a packet switched data connections established via the mobile terminal 100. Furthermore, the interface may allow for adding further gateway nodes 102 to the configuration, which may be specified by the user of the mobile communication device.

Hereinafter, the operation of mobile communication device 100 and the adapter module 210 for setting up a call to the terminating communication device 101 will be described.

Initially, the user of the mobile communication device 100 initiates the call by specifying the identification code of the terminating communication device 101, i.e. the MSISDN assigned to the terminating communication device 101. This may be done by inputting the identification code manually using the input unit 205 of the mobile terminal 200 or by selecting the identification code from a phone book provided by the phone book application of the mobile communication device 100.

After the identification code of the terminating communication device 101 has been specified, the identification code is passed from the mobile terminal 200 to the adapter module 210 by the main processor 201 of the mobile terminal 200. For this purpose, the adapter module 210 may invoke the so-called "call control by SIM" function provided by the SAT or the "call control by USIM" function provided by the USAT. When this function is activated the digit string dialled by the mobile user are first passed to a SAT or USAT application before the mobile communication device 100 sets up the call and the application is able to allow, bar or modify the call request generated by the mobile communication device 100.

Upon receipt of the identification code, the adapter module 210 evaluates the call request in accordance with the criteria specified in the adapter module 210 in order to determine the intended modification of the call request. For this purpose, the adapter module 210 initially determines, whether the call is to be set up via a gateway node 102. If this is not the case, the adapter module 210 allows the call and the call request is generated and transmitted to the PLMN 103 in the conventional manner. Otherwise the adapter module 210 determines, how the call request is to be modified: If the adapter module 210 is configured to select the gateway node 102 from a plurality the gateway node 102, the adapter module 210 determines the most appropriate gateway node 102 using the look up table stored in the memory unit 212 of the adapter module 210. Then the adapter module 210 modifies the call request in such a way that the call is established via the selected gateway node 102. If only one gateway node 102 is specified in the adapter module 210, it modifies the call request in such way that the call is established via this gateway node 102.

The modification of the call request depends on the type of the gateway node 102, which is selected for establishing the connection, particularly on the type of procedure the gateway node 102 invokes for establishing the connection.

If the gateway node 102 invokes a call through procedure for establishing the call, the adapter module 210 determines the access code assigned to the gateway node 102 and adds the access code to the identification code of the terminating communication device 101 received from the mobile terminal 200, thereby generating a modified call request. Then, the adapter module 210 controls the mobile terminal 200 to send the modified call request to the PLMN 103.

Due to the access code supplementing the identification code of the terminating communicating device 101, the PLMN 103 routes the call request to the gateway node 102 to which the access code is assigned and the gateway node 102 establishes the connection between the mobile communication device 100 and the terminating communication device 101 as described before.

If the gateway node 102 invokes a call back procedure, which is triggered by an initial call from the mobile communication device 100 to the network node 102, the call request is modified in a similar way. The adapter module 210 determines the access code assigned to the gateway node 102 and adds it to identification code of the terminating communication device 101 received from the mobile terminal 200. Then, the adapter module 210 controls the mobile terminal 200 to send the call request including the identification code of the terminating communication device 101 supplemented by the access code of the gateway node 102 to the PLMN 103.

The PLMN 103 routes this call request to the gateway node 102. Upon receipt of the call request, the gateway node 102 rejects of terminates the incoming call and initiates a further call to the mobile communication device 100.

As described before, the call has to be answered by the mobile communication device 100. In one embodiment, this may be done manually by the user of the mobile communication device 100. In another embodiment, the adapter module 210 instructs the mobile terminal 200 to accept the call automatically. Upon acceptance of the call, gateway node 102 sets up the call in the above-described way.

As describe before, the gateway node 102 may also be configured in such a way, that the call back procedure is triggered by a request message sent from the mobile communication device 100 to the gateway node 102. If this is the case, the adapter module 210 bars the establishment of the call upon receipt of the identification code of the terminating communication device 101 from the mobile terminal 200. Furthermore, the adapter module 210 generates a request message, which is addressed using the access code assigned to the gateway node 102 and which contains the received identification of the terminating communication device 101. In addition, the request message may include the identification code of the mobile communication device 100. Then, the adapter module 210 passes the request message to the mobile terminal 200 and instructs the mobile terminal 200 to send the request message to the gateway node 102 via the communication channel the gateway node 102 provides for transmitting the request message. As described before, the request message may be sent to the gateway node 102 as a short message or it may be transmitted via the packet switched domain of the PLMN 103.

In response to the receipt of the request message, the gateway node 102 initiates a call to the mobile communication device 100, which has to be accepted by the mobile communication device 100. Again, this may be done manually by the user of the mobile communication device 100 or the adapter module 210 may instruct the mobile terminal 200 to accept the call automatically. Upon acceptance of the call, gateway node 102 sets up the call in the above-described way.

## Claims

1. An adapter module (210) for use in a mobile communication device (100) connected to a first communication network (103), the mobile communication device (100) comprising a mobile terminal (200) and a subscriber identification module (207) connected to the mobile terminal (207), wherein the adapter module (210) is connectable to the mobile terminal (200) and wherein the adapter module (210) is configured to modify a communication request generated by the mobile communication device (100) for establishing a communication link to a terminating communication device (101) in such a way that the communication request is transmitted to a predetermined gateway node (102) connected to the first communication network (103), the gateway node (102) being configured to establish the communication link between the mobile communication device (100) and the terminating communication device (101).

2. The adapter module (210) according to claim 1, wherein the adapter module (210) is connectable between the mobile terminal (200) and subscriber identification module (207).

3. The adapter module (210) according to claim 1, wherein the adapter module (210) is configured to add an access code assigned to the gateway node (102) to an identification code of the terminating communication device (101) included in the communication request, the access code causing the communication request to be routed to the gateway node (102) by the first communication network (103).

4. The adapter module (210) according to claim 3, wherein the identification code comprises a telephone number assigned to the terminating communication device (101) and wherein the access code is a prefix, which is being added to the telephone number.

5. The adapter module (210) according to one of the preceding claims, wherein the gateway node (102) is configured to initiate a first communication connection between the gateway node (102) and the mobile communication device (100) upon receipt of the communication request and to connect the first communication connection to a second communication connection between the gateway node (102) and the terminating communication device (101).

6. The adapter module (210) according to claim 5, wherein the adapter module (210) is configured to instruct the mobile terminal (200) to accept the first communication link automatically.

7. The adapter module according to claim 5 or 6, wherein the adapter module (210) is configured to modify the communication request by generating a request message containing the identification code of the terminating communication device and to control the mobile terminal (200) to send the request message to the gateway node (102) via the first communication network (103).

8. The adapter module (210) according to claim 7, wherein the request message is sent to the gateway node (102) using a second communication service provided by the first communication network (102), which is different from a first communication service provided by the first communication network (103) that is used for establishing the communication link between the mobile communication device (100) and the terminating communication device (101).

9. The adapter module (210) according to one of the preceding claims, wherein at least two gateway nodes (102) are connected to the first communication network (103) and wherein the adapter module (210) is configured to select the gateway node (102) to which the communication request is transmitted in accordance with predefined criteria.

10. The adapter module (210) according to one of the preceding claims, wherein the first communication network (103) is a mobile communication network.

11. A mobile communication device (100) for initiating a communication link to a terminating communication device (101) selected by a user of the mobile communication device (100), the mobile communication device (100) being connected to a first communication network (103) and comprising a mobile terminal (200) to which a subscriber identification module (207) is connected, a predetermined gateway mode (102) being connected to the first communication network (103) and adapted to establish the communication between the mobile communication device (100) and the terminating communication device (101), **characterized in that** an adapter module (210) is connected to the mobile terminal (200), the adapter module (210) being configured to modify a communication request generated by the mobile communication device (100) for establishing the communication link to the terminating communication device (101) in such a way that the communication request is transmitted to the predetermined gateway node (102).

12. A method for initiating a communication link between a mobile communication device (100) and a terminating communication device (101) selected by a user of the mobile communication device (100), the mobile communication device (100) being connected to a communication network (103) and comprising a mobile terminal (200) to which a subscriber identification module (207) is connected, a predetermined gateway node (102) being connected to the first communication network (103) and establishes the communication between the mobile communication device (100) and the terminating communication device (101), **characterized in that** an adapter module (210) is being connected to the mobile terminal (200), wherein the adapter module (210) modifies a communication request generated by the mobile communication device (100) for establishing the communication link to the terminating communication device (101) in such a way that it is transmitted to the predefined gateway node (102)

## Patentansprüche

1. Adaptermodul (210) zur Verwendung in einer Mobilkommunikationsvorrichtung (100), die mit einem ersten Kommunikationsnetz (103) verbunden ist, wobei die Mobilkommunikationsvorrichtung (100) ein mobiles Endgerät (200) und ein mit dem mobilen Endgerät (207) verbundenes Teilnehmeridentifizierungsmodul (207) umfasst, wobei das Adaptermodul (210) mit dem mobilen Endgerät (200) verbunden werden kann und wobei das Adaptermodul (210) dazu ausgestaltet ist, eine durch die Mobilkommunikationsvorrichtung (100) erzeugte Kommunikationsanforderung zum Aufbauen einer Kommunikationsverbindung mit einer Zielkommunikationsvorrichtung (101) in einer Weise zu ändern, dass die Kommunikationsanforderung an einen vorgegebenen mit dem ersten Kommunikationsnetz (103) verbundenen Gateway-Knoten (102) gesendet wird, wobei der Gateway-Knoten (102) dazu ausgestaltet ist, die Kommunikationsverbindung zwischen der Mobilkommunikationsvorrichtung (100) und der Zielkommunikationsvorrichtung (101) aufzubauen.

2. Adaptermodul (210) nach Anspruch 1, wobei das Adaptermodul (210) zwischen das mobile Endgerät (200) und das Teilnehmeridentifizierungsmodul (207) geschaltet werden kann.

3. Adaptermodul (210) nach Anspruch 1, wobei das Adaptermodul (210) dazu ausgestaltet ist, einen dem Gateway-Knoten (102) zugewiesenen Zugriffscodes zu einem in der Kommunikationsanforderung enthaltenen Kennungscode der Zielkommunikationsvorrichtung (101) hinzuzufügen, wobei der Zugriffscode bewirkt, dass die Kommunikationsanforderung durch das erste Kommunikationsnetz (103) zu dem Gateway-Knoten (102) geroutet wird.

4. Adaptermodul (210) nach Anspruch 3, wobei der Kennungscode eine der Zielkommunikationsvorrichtung (101) zugewiesene Telefonnummer umfasst und wobei der Zugriffscode eine Vorwahl ist, die zu der Telefonnummer hinzugefügt wird.

5. Adaptermodul (210) nach einem der vorhergehenden Ansprüche, wobei der Gateway-Knoten (102) dazu ausgebildet ist, eine erste Kommunikationsverbindung zwischen dem Gateway-Knoten (102) und der Mobilkommunikationsvorrichtung (100) bei Empfang der Kommunikationsanforderung zu initiieren und die erste Kommunikationsverbindung mit einer zweiten Kommunikationsverbindung zwischen dem Gateway-Knoten (102) und der Zielkommunikationsvorrichtung (101) zu verbinden.

6. Adaptermodul (210) nach Anspruch 5, wobei das Adaptermodul (210) dazu eingerichtet ist, das mobile Endgerät (200) zum automatischen Annehmen der ersten Kommunikationsverbindung anzuweisen.

7. Adaptermodul nach Anspruch 5 oder 6, wobei das Adaptermodul (210) dazu ausgestaltet ist, die Kommunikationsanforderung durch Erzeugen einer Anforderungsnachricht, die den Kennungscode der Zielkommunikationsvorrichtung enthält, zu ändern und das mobile Endgerät (200) zu steuern, um die Anforderungsnachricht über das erste Kommunikationsnetz (103) an den Gateway-Knoten (102) zu senden.

8. Adaptermodul (210) nach Anspruch 7, bei dem die Anforderungsnachricht unter Verwendung eines durch das erste Kommunikationsnetz (103) bereitgestellten zweiten Kommunikationsdienstes, der von einem durch das erste Kommunikationsnetz (103) bereitgestellten ersten Kommunikationsdienst, der zum Aufbauen der Kommunikationsverbindung zwischen der Mobilkommunikationsvorrichtung (100) und der Zielkommunikationsvorrichtung (101) verwendet wird, verschieden ist, an den Gateway-Knoten (102) gesendet wird.

9. Adaptermodul (210) nach einem der vorhergehenden Ansprüche, wobei wenigstens zwei Gateway-Knoten (102) mit dem ersten Kommunikationsnetz (103) verbunden sind und wobei das Adaptermodul (210) dazu ausgestaltet ist, anhand von vorgegebenen Kriterien denjenigen Gateway-Knoten (102) auszuwählen, an den die Kommunikationsanforderung gesendet wird.

10. Adaptermodul (210) nach einem der vorhergehenden Ansprüche, wobei das erste Kommunikationsnetz (103) ein Mobilkommunikationsnetz ist.

11. Mobilkommunikationsvorrichtung (100) zum Initiieren einer Kommunikationsverbindung mit einer durch einen Nutzer der Mobilkommunikationsvorrichtung (100) ausgewählten Zielkommunikationsvorrichtung (101), wobei die Mobilkommunikationsvorrichtung (100) mit einem ersten Kommunikationsnetz (103) verbunden ist und ein mobiles Endgerät (200) umfasst, mit dem ein Teilnehmeridentifizierungsmodul (207) verbunden ist, wobei mit dem ersten Kommunikationsnetz (103) ein vorgegebener Gateway-Knoten (102) verbunden ist, der dazu ausgestaltet ist, die Kommunikation zwischen der Mobilkommunikationsvorrichtung (100) und der Zielkommunikationsvorrichtung (101) aufzubauen, **dadurch gekennzeichnet, dass** mit dem mobilen Endgerät (200) ein Adaptermodul (210) verbunden ist, wobei das Adaptermodul (210) dazu ausgestaltet ist, eine durch die Mobilkommunikationsvorrichtung (100) erzeugte Kommunikationsanforderung zum Aufbauen der Kommunikationsverbindung mit der Zielkommunikationsvorrichtung (101) in einer Weise zu ändern, dass die Kommunikationsanforderung an den vorgegebenen Gateway-Knoten (102) gesendet wird.

12. Verfahren zum Initiieren einer Kommunikationsverbindung zwischen einer Mobilkommunikationsvorrichtung (100) und einer durch einen Nutzer der Mobilkommunikationsvorrichtung (100) ausgewählten Zielkommunikationsvorrichtung (101), wobei die Mobilkommunikationsvorrichtung (100) mit einem Kommunikationsnetz (103) verbunden ist und ein mobiles Endgerät (200) umfasst, mit dem ein Teilnehmeridentifizierungsmodul (207) verbunden ist, wobei mit dem ersten Kommunikationsnetz (103) ein vorgegebener Gateway-Knoten (102) verbunden ist und die Kommunikation zwischen der Mobilkommunikationsvorrichtung (100) und der Zielkommunikationsvorrichtung (101) aufbaut, **dadurch gekennzeichnet, dass** mit dem mobilen Endgerät (200) ein Adaptermodul (210) verbunden wird, wobei das Adaptermodul (210) eine durch die Mobilkommunikationsvorrichtung (100) erzeugte Kommunikationsanforderung zum Aufbauen der Kommunikationsverbindung mit der Zielkommunikationsvorrichtung (101) in einer Weise ändert, dass sie an den vorgegebenen Gateway-Knoten (102) gesendet wird.

## Revendications

1. Module adaptateur (210) destiné à être utilisé dans un dispositif de communication mobile (100) connecté à un premier réseau de communication (103), le dispositif de communication mobile (100) comprenant un terminal mobile (200) et un module d'identification d'abonné (207) connecté au terminal mobile (200), dans lequel le module adaptateur (210) est connectable au terminal mobile (200) et dans lequel le module adaptateur (210) est configuré pour modifier une requête de communication générée par le dispositif de communication mobile (100) pour établir une liaison de communication vers un dispositif de communication termineur (101) de telle sorte que la requête de communication est transmise à un noeud de passerelle prédéterminé (102) connecté au premier réseau de communication (103), le noeud de passerelle (102) étant configuré pour établir la liaison de communication entre le dispositif de communication mobile (100) et le dispositif de communication termineur (101).

2. Module adaptateur (210) selon la revendication 1, dans lequel le module adaptateur (210) est connectable entre le terminal mobile (200) et le module d'identification d'abonné (207).

3. Module adaptateur (210) selon la revendication 1, dans lequel le module adaptateur (210) est configuré pour ajouter un code d'accès attribué au noeud de passerelle (102) à un code d'identification du dispositif de communication termineur (101) inclus dans la requête de communication, le code d'accès provoquant le routage de la requête de communication vers le noeud de passerelle (102) par le premier réseau de communication (103).

4. Module adaptateur (210) selon la revendication 3, dans lequel le code d'identification comprend un numéro de téléphone attribué au dispositif de communication termineur (101) et dans lequel le code d'accès est un préfixe qui est ajouté au numéro de téléphone.

5. Module adaptateur (210) selon l'une des revendications précédentes, dans lequel le noeud de passerelle (102) est configuré pour initier une première connexion de communication entre le noeud de passerelle (102) et le dispositif de communication mobile (100) suite à la réception de la requête de communication et pour connecter la première connexion de communication à une seconde connexion de communication entre le noeud de passerelle (102) et le dispositif de communication termineur (101).

6. Module adaptateur (210) selon la revendication 5, dans lequel le module adaptateur (210) est configuré pour instruire le terminal mobile (200) d'accepter la première liaison de communication automatiquement.

7. Module adaptateur selon la revendication 5 ou 6, dans lequel le module adaptateur (210) est configuré pour modifier la requête de communication en générant un message de requête contenant le code d'identification du dispositif de communication termineur et pour commander le terminal mobile (200) d'envoyer le message de requête au noeud de passerelle (102) par le biais du premier réseau de communication (103).

8. Module adaptateur (210) selon la revendication 7, dans lequel le message de requête est envoyé au noeud de passerelle (103) en utilisant un second service de communication pourvu par le premier réseau de communication (103) qui est différent d'un premier service de communication pourvu par le premier réseau de communication (102) qui est utilisé pour établir la liaison de communication entre le dispositif de communication mobile (100) et le dispositif de communication termineur (101).

9. Module adaptateur (210) selon l'une des revendications précédentes, dans lequel au moins deux noeuds de passerelle (102) sont connectés au premier réseau de communication (103) et dans lequel le module adaptateur (210) est configuré pour sélectionner le noeud de passerelle (102) auquel la requête de communication est transmise conformément à des critères prédéfinis.

10. Module adaptateur (210) selon l'une des revendications précédentes, dans lequel le premier réseau de communication (103) est un réseau de communication mobile.

11. Dispositif de communication mobile (100) destiné à initier une liaison de communication vers un dispositif de communication termineur (101) sélectionné par un utilisateur du dispositif de communication mobile (100), le dispositif de communication mobile (100) étant connecté à un premier réseau de communication (103) et comprenant un terminal mobile (200) auquel un module d'identification d'abonné (207) est connecté, un noeud de passerelle prédéterminé (102) étant connecté au premier réseau de communication (103) et adapté à établir la communication entre le dispositif de communication mobile (100) et le dispositif de communication termineur (101), **caractérisé en ce qu'**un module adaptateur (210) est connecté au terminal mobile (200), le module adaptateur (210) étant configuré pour modifier une requête de communication générée par le dispositif de communication mobile (100) pour établir la liaison de communication vers le dispositif de communication termineur (101) de telle sorte que la requête de communication est transmise au noeud de passerelle prédéterminé (102).

12. Procédé pour initier une liaison de communication entre un dispositif de communication mobile (100) et un dispositif de communication termineur (101) sélectionné par un utilisateur du dispositif de communication mobile (100), le dispositif de communication mobile (100) étant connecté à un réseau de communication (103) et comprenant un terminal mobile (200) auquel un module d'identification d'abonné (207) est connecté, un noeud de passerelle prédéterminé (102) étant connecté au premier réseau de communication (103) et établit la communication entre le dispositif de communication mobile (100) et le dispositif de communication termineur (101), **caractérisé en ce qu'**un module adaptateur (210) est connecté au terminal mobile (200), dans lequel le module adaptateur (210) modifie une requête de communication générée par le dispositif de communication mobile (100) pour établir la liaison de communication vers le dispositif de communication termineur (101) de telle sorte qu'elle est transmise au noeud de passerelle prédéfini (102).
